# EUROPÄISCHE PATENTSCHRIFT

(11) **EP 0 468 349 B1**
(45) Veröffentlichungstag und Bekanntmachung des Hinweises auf die Patenterteilung: **20.04.1994**
(21) Anmeldenummer: 91111911.3
(22) Anmeldetag: 17.07.1991
(51) Int. Cl.: B60P 3/08

(54) **Vorrichtung zur Lagerung und zum Transport von Kraftfahrzeugen, insbesondere von Pkw**
Appliance for storing and transporting vehicles, particularly passenger cars
Mécanisme pour le stockage et le transport de véhicules, notamment voitures particulières

(30) Priorität: 24.07.1990 DE 4023429
(43) Veröffentlichungstag der Anmeldung: 29.01.1992
(73) Patentinhaber: Kimm, Bruno, D-34123 Kassel (DE)
(72) Erfinder: Kimm, Bruno, D-34123 Kassel (DE)
(74) Vertreter: Walther, Horst, Dipl.-Ing.

(56) Entgegenhaltungen:
- WO-A-80/01553
- US-A- 3 003 435
- US-A- 4 239 275

## Beschreibung

Die Erfindung betrifft eine Vorrichtung zur Lagerung und zum Transport von Kraftfahrzeugen, insbesondere von Pkw.

Der Transport von Personenkraftwagen, insbesondere vom Hersteller zum Händler, erfolgt nach dem Stand der Technik auch auf LKW-Spezialtransportern. Der Betrieb eines solchen Spezialtransporters ist allerdings nur dann unter wirtschaftlichen Gesichtspunkten gewährleistet, wenn der Transporter ausgelastet ist.

Dies ist insbesondere dann nicht mehr der Fall, wenn nur einige, wenige Pkw zu einem Händler, der vom zuvor angefahrenen Händler weit entfernt seinen Sitz hat, gebracht werden müssen. Ein weiterer Nachteil bei dem Transport von Pkw mit den bekannten Spezialtransportern besteht darin, daß das Auf- und Abladen dieser Pkw in einer bestimmten Reihenfolge erfolgen muß. Das bedeutet, daß die zuletzt aufgeladenen Fahrzeuge zuerst abgeladen werden müssen. Darüber hinaus besteht eine erhöhte Gefahr der Beschädigung der Pkw's bei Auf- und Abfahren auf den Spezialtransporter.

Der Erfindung liegt daher die Aufgabe zugrunde, eine Vorrichtung der eingangs genannten Art zu schaffen, mit der die oben beschriebenen Nachteile vermieden sind. Insbesondere soll durch diese Vorrichtung auch eine Minimierung der Lagerungskosten für Pkw erreichbar sein, da der Flächenbedarf bei der Lagerung von Pkw sehr hoch ist.

Die Lösung der Aufgabe besteht erfindungsgemäß in einer das Fahrzeug aufnehmenden Palette. Im einzelnen zeichnet sich die Palette durch ein überfahrbares Bodenelement und am Bodenelement angeordneter, in vertikaler Stellung am Bodenelement arretierbarer Stützen zur stapelbaren Aufnahme einer weiteren Palette aus. Durch den Transport von Pkw's auf Paletten wird der Einsatz von eingangs beschriebenen Spezialtransportern überflüssig; vielmehr kann zum Transport des auf einer Palette aufsitzenden Fahrzeugs, jeder beliebige LKW eingesetzt werden, der bezüglich der Größe und Traglast die hierfür erforderlichen Voraussetzungen erfüllt.

Hierdurch wird insbesondere die Möglichkeit eröffnet, PKW im Stückgutsammelladungsverkehr auszuliefern, wobei das Auf- und Abladen der einzelnen Paletten mittels Gabelstapler vorgenommen wird.

Das Bodenelement selbst ist nach einem besonderen Merkmal der Erfindung mit einer trapezförmigen Erhöhung versehen, die sich in vorteilhafterweise in etwa über die gesamte Länge eines Autodaches erstreckt. Durch diese Ausbildung einer Palette wird der in der Höhe erforderliche Platzbedarf vermindert, so daß bei zwei übereinander gestapelten Paletten die für einen LKW-Transport mögliche maximale Höhe von 4,10 m nicht überschritten wird.

Um Pkw's mit unterschiedlichen Achsabstand aufnehmen zu können, ist nach einem weiteren Merkmal der Erfindung das Bodenelement horizontal verlängerbar ausgebildet. Zur Aufnahme der Gabel eines Gabelstaplers weist das Bodenelement, das nach einem weiteren vorteilhaften Merkmal der Erfindung aus zwei parallelen Überfahrstegen besteht, zwei Öffnungen auf.

Um den Raumbedarf von leeren Paletten zu minimieren, sind die Stützen, vorzugsweise seitlich abklappbar am Bodenelement angeordnet. Die vertikale Arretierung der Stützen erfolgt durch Streben, die die Stützen mit dem Bodenelement verbinden. Diese Streben sind lösbar mit den Stützen und verschwenkbar mit dem Bodenelement verbunden.

Nach einem besonderen Merkmal der Erfindung sind die Stützelemente teleskopartig verlängerbar ausgebildet.

Hierzu besteht die Stütze aus zwei Elementen, wobei das eine Element der Aufnahme des Elementes der einen Stütze und des Elementes der anderen Stütze der darauf gestapelten Palette dient. Das eine Stützelement dient somit nicht nur der teleskopartigen Verlängerung, sondern ebenfalls der Aufnahme der Stütze bzw. des Stützenelementes der Stütze der darüber gestapelten Palette. Hierdurch wird die Möglichkeit eröffnet, bei flachbauenden Sportwagen unter Einhaltung der maximal möglichen Höhe von 4,10 m u.U. drei Paletten übereinander zu transportieren, wobei im Stapelbetrieb die Stützen zweier übereinander angeordneter Paletten beispielsweise durch Bolzen miteinander verriegelbar sind.

In der Zeichnung ist eine beispielsweise Ausführungsform dargestellt.
- Fig. 1: zeigt zwei übereinander gestapelte Paletten in einer Seitenansicht;

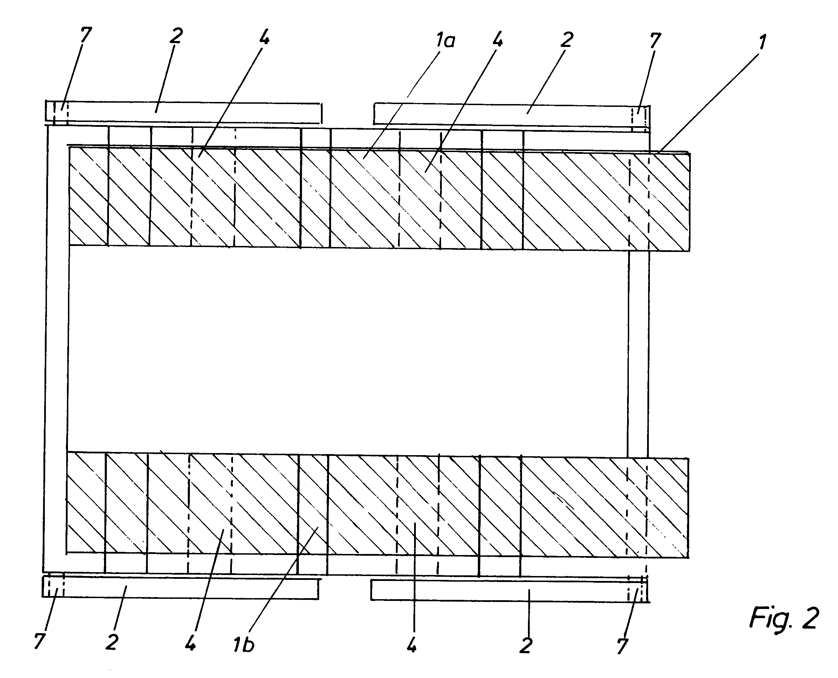

- Fig. 2: zeigt eine Draufsicht auf eine Palette, wobei die Stützen abgeklappt sind;

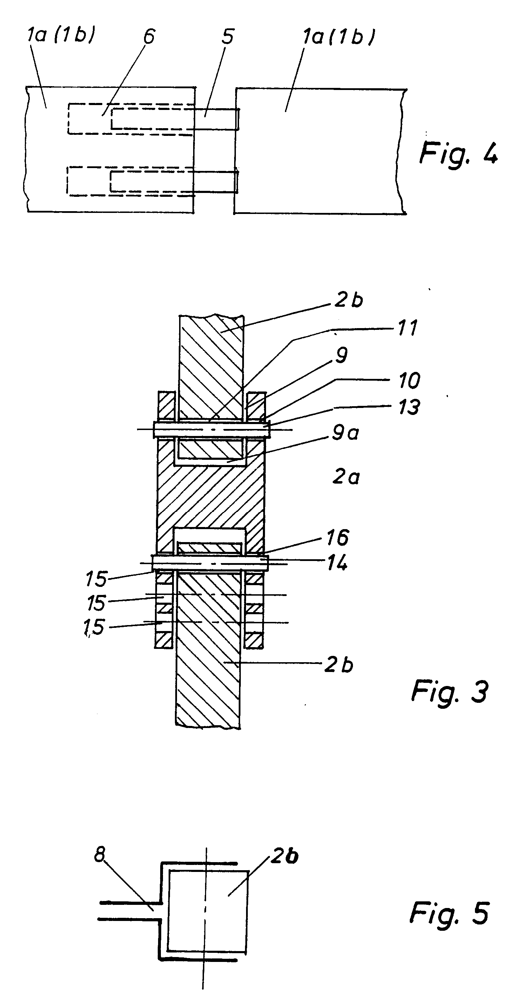

- Fig. 3: zeigt die Verriegelung zweier aufeinanderstehender Stützen von zwei aufeinander gestapelten Paletten (Einzelheit X);
- Fig. 4: zeigt die horizontale Verlängerung eines Überfahrsteges als Ausschnitt in einer Draufsicht;
- Fig. 5: zeigt einen Schnitt gemäß der Linie V-V in Fig. 1.

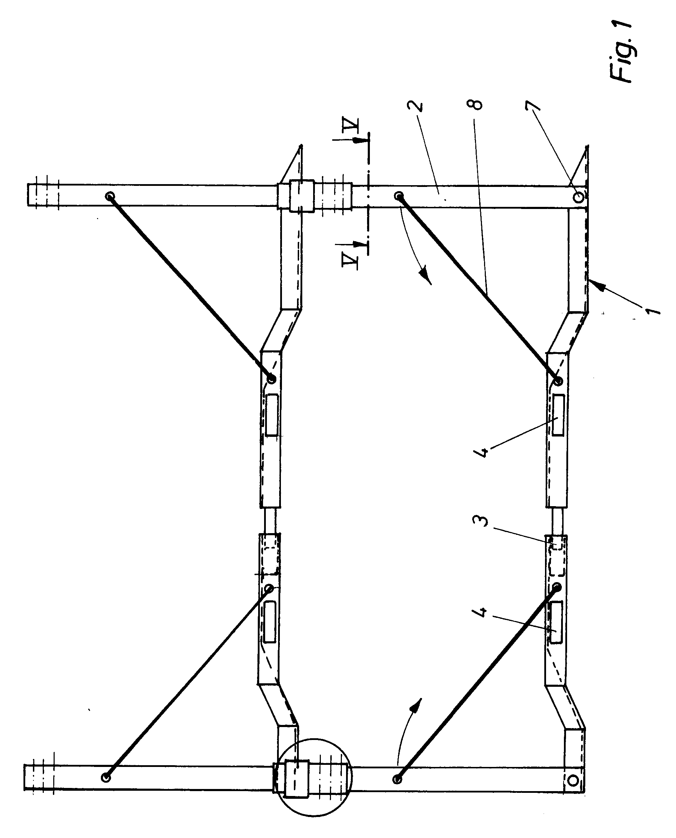

Gemäß Fig. 1 besteht die Palette aus einem insgesamt mit 1 bezeichneten Bodenelement, sowie vier Stützen 2, die seitlich an dem Bodenelement, das aus den beiden Überfahrstegen 1a, 1b besteht, abklappbar angeordnet sind. Die das Bodenelement 1 bildenden beiden Überfahrstege 1a und 1b weisen eine trapezförmige Erhöhung 3 auf, die sich in etwa über die gesamte Länge eines Autodaches erstreckt. Durch diese Art der Ausbildung des Bodenelementes können entsprechend kürzerer Stützelemente zum Einsatz kommen, wodurch sich die gesamte Höhe einer derartigen Palette vermindern läßt, mit dem Ziel, daß bei zwei übereinander angeordneten Paletten die für einen LKW-Transporter maximale Höhe von 4,10 m nicht überschritten wird. Das Bodenelement weist im Bereich der trapezförmigen Erhöhung zwei Öffnungen 4 auf, die der Aufnahme der Gabel eines Gabelstaplers dienen.

Um die Palette unterschiedlichen Achsabständen anpassen zu können, sind die Überfahrstege im Bereich der trapezförmigen Erhöhung horizontal verlängerbar ausgebildet. Hierzu sind die beiden Teile der Palette durch teleskopartig ineinander geführte Profile, beispielsweise Vierkantprofile 5 und 6 miteinander verbunden.

Die Stützen 2 sind jeweils durch ein Gelenk 7 seitlich an dem Bodenelement 1 angeordnet. Die Arretierung der Stütze 2 in vertikaler Lage erfolgt durch eine Diagonalstrebe 8, die einerseits mit der Stütze 2 und andererseits mit dem Bodenelement 1 in Verbindung steht. Diese Diagonalstrebe 8 zum Zwecke des Abklappens ist lösbar, beispielsweise durch einen Bolzen 8a, mit der Stütze 2 verbunden.

Jede Stütze 2 besteht aus zwei teleskopartig ineinander geführten Stützenelementen 2a und 2b. Hierbei ist das Stützenelement 2b in dem Stützenelement 2a geführt. Das Stützenelement 2a ist demzufolge in seinen Außenabmessungen größer ausgebildet, als das Stützenelement 2b. Die Fixierung der beiden teleskopartig ineinander geführten Stützenelemente 2a und 2b erfolgt durch einen Bolzen 14, der durch die in dem Stützenelement 2a angeordnete Bohrung 15 und die in dem Stützenelement 2b angeordnete Bohrung 16 hindurchragt.

An seiner Oberseite weist das Stützenelement 2a eine Aussparung 9 zur Aufnahme des Stützenelementes 2b der Stütze der darüber gestapelten Palette auf. Diese Aussparung 9 besitzt einen Boden 9a zum Aufsetzen des Stützenelementes 2b der Stütze 2 der oberen Palette. Die Verriegelung des Stützenelementes 2b auf dem Stützenelement 2a erfolgt durch den Bolzen 13, der durch eine Bohrung 10 im Stützenelement 2a und die Bohrung 11 im Stützenelement 2b hindurchragt.

## Patentansprüche

1. Vorrichtung zur Lagerung und zum Transport von Kraftfahrzeugen, insbesondere von Pkw
**gekennzeichnet durch**
eine das Fahrzeug aufnehmende Palette.

2. Vorrichtung nach Anspruch 1
**dadurch gekennzeichnet,** daß
ein überfahrbares Bodenelement (1) und am Bodenelement (1) angeordnete Stützen (2) zur stapelbaren Aufnahme einer weiteren Palette vorgesehen sind.

3. Vorrichtung nach Anspruch 2
**dadurch gekennzeichnet,** daß
das Bodenelement (1) mit einer trapezförmigen Erhöhung (3) versehen ist.

4. Vorrichtung nach Anspruch 3
**dadurch gekennzeichnet,** daß
sich die trapezförmige Erhöhung (3) etwa über die gesamte Länge eines Autodaches erstreckt.

5. Vorrichtung nach Anspruch 2
**dadurch gekennzeichnet,** daß
das Bodenelement (1) horizontal verlängerbar ausgebildet ist.

6. Vorrichtung nach Anspruch 2
**dadurch gekennzeichnet,** daß
das Bodenelement (1) zwei Öffnungen (4) zur Aufnahme der Gabel eines Gabelstaplers aufweist.

7. Vorrichtung nach Anspruch 2 bis 4
**dadurch gekennzeichnet,** daß
das Bodenelement (1) aus zwei Überfahrstegen (1a, 1b) besteht.

8. Vorrichtung nach Anspruch 2
**dadurch gekennzeichnet,** daß
die Stützen (2) abklappbar am Bodenelement (1) angeordnet sind.

9. Vorrichtung nach Anspruch 8
**dadurch gekennzeichnet,** daß
die Stützen (2) seitlich abklappbar am Bodenelement (1) angeordnet sind.

10. Vorrichtung nach Anspruch 2
**dadurch gekennzeichnet,** daß
die Stützen (2) in vertikaler Stellung arretierbar am Bodenelement (1) angeordnet sind.

11. Vorrichtung nach Anspruch 2
**dadurch gekennzeichnet,** daß
die Stützen (2) teleskopartig verlängerbar ausgebildet sind.

12. Vorrichtung nach Anspruch 11
**dadurch gekennzeichnet,** daß
eine Stütze (2) aus zwei Elementen (2a, 2b) besteht, wobei das eine Element (2a) der Aufnahme des Elementes (2b) der einen Stütze (2) und des Elementes (2b) der anderen Stütze (2) der darauf gestapelten Palette dient.

13. Vorrichtung nach Anspruch 2
**dadurch gekennzeichnet,** daß
im Stapelbetrieb die Stützen (2) zweier übereinander angeordneter Paletten miteinander verriegelbar sind.

14. Vorrichtung nach Anspruch 10
**dadurch gekennzeichnet,** daß
zur vertikalen Arretierung einer Stütze (2) eine Diagonalstrebe (8) vorgesehen ist, die lösbar an der Stütze und verschwenkbar mit dem Bodenelement verbunden ist.

## Claims

1. Device for the mounting of for the transport of motor vehicles, especially of passenger vehicles, characterised by a palette receiving the vehicle.

2. Device according to claim 1, characterised thereby that a base element (1), which can be driven over, and supports (2), which are arranged at the base element (1), for the stackable reception of a further palette are provided.

3. Device according to claim 2, characterised thereby that the base element (1) is provided with a trapezium-shaped elevation (3).

4. Device according to claim 3, characterised thereby that the trapeziun-shaped elevation (3) extends approximately over the entire length of a car roof.

5. Device according to claim 2, characterised thereby that the base element (1) is constructed to be horizontally extensible.

6. Device according to claim 2, characterised thereby that the base element (1) has two openings (4) for the reception of the fork of a forklift truck.

7. Device according to claims 2 to 4, characterised thereby that the base element (1) consists of two flanges (1a, 1b) which can be driven over.

8. Device according to claim 2, characterised thereby that the supports (2) are arranged to be unfoldable at the base element (1).

9. Device according to claim 8, characterised thereby that the supports (2) arranged to be laterally unfoldable at the base element (1).

10. Device according to claim 2, characterised thereby that the supports (2) are arranged to be lockable at the base element (1) in vertical setting.

11. Device according to claim 2, characterised thereby that the supports (2) are constructed to be telescopically extensible.

12. Device according to claim 11, characterised thereby that a support (2) consists of two elements (2a, 2b), wherein the one element (2a) serves for the reception of the element (2b) of the one support (2) and of the element (2b) of the other support (2) of the palette stacked thereon.

13. Device according to claim 2, characterised thereby that in stacking operation the supports (2) of two palettes arranged one above the other are lockable together.

14. Device according to claim 10, characterised thereby that provided for the vertical locking of a support (2) is a diagonal strut (8) which is detachably connected to the support and pivotably connected to the base element.

## Revendications

1. Dispositif pour le stockage et le transport de véhicules automobiles, notamment de voitures, **caractérisé** par une palette supportant le véhicule.

2. Dispositif selon la revendication 1, **caractérisé** en ce qu'il comporte un élément de base carrossable (1) et des montants (2) montés sur l'élément de base (1) pour supporter par empilage une autre palette.

3. Dispositif selon la revendication 2, **caractérisé** en ce que l'élément de base (1) comporte une surélévation trapézoïdale (3).

4. Dispositif selon la revendication 3, **caractérisé** en ce que la surélévation trapézoïdale (3) s'étend approximativement sur toute la longueur d'un toit d'automobile.

5. Dispositif selon la revendication 2, **caractérisé** en ce que l'élément de base (1) est extensible horizontalement en longueur.

6. Dispositif selon la revendication 2, **caractérisé** en ce que l'élément de base (1) comporte deux ouvertures (4) pour recevoir la fourche d'un élévateur à fourche.

7. Dispositif selon l'une des revendications 2 à 4,**caractérisé** en ce que l'élément de base (1) se compose de deux passerelles carrossables (1a, 1b).

8. Dispositif selon la revendication 2, **caractérisé** en ce que les montants (2) sont montés de manière rabattable sur l'élément de base (1).

9. Dispositif selon la revendication 8, **caractérisé** en ce que les montants (2) sont rabattables sur les côtés de l'élément de base (1).

10. Dispositif selon la revendication 2, **caractérisé** en ce que les montants (2) peuvent être bloqués en position verticale sur l'élément de base (1).

11. Dispositif selon la revendication 2, **caractérisé** en ce que les montants (2) sont extensibles en longueur de manière télescopique.

12. Dispositif selon la revendication 11, **caractérisé** en ce qu'un montant (2) se compose de deux éléments (2a, 2b) dont le premier (2a) sert à recevoir l'autre élément (2b) de ce montant (2) et l'autre élément (2b) de l'autre montant (2) de la palette empilée sur lui.

13. Dispositif selon la revendication 2, **caractérisé** en ce que, dans un empilage, les montants (2) de deux palettes superposées sont verrouillables l'un à l'autre.

14. Dispositif selon la revendication 10, **caractérisé** en ce que, pour bloquer verticalement un montant (2), il est prévu une contrefiche diagonale (8) qui est raccordée de manière amovible au montant et de manière pivotante à l'élément de base.
